# EUROPEAN PATENT APPLICATION

(11) **EP 3 779 364 A1**
(43) Date of publication of application: **17.02.2021**
(21) Application number: 19785392.2
(22) Date of filing: 26.03.2019
(51) Int. Cl.: G01C 21/34, G08G 1/16, G09B 29/00, G09B 29/10

(54) **RECOMMENDED LANE DETERMINATION DEVICE**

(30) Priority: 13.04.2018 JP 2018077546
(71) Applicant: HITACHI AUTOMOTIVE SYSTEMS, LTD., Hitachinaka-shi Ibaraki 312-8503 (JP); NISSAN MOTOR CO., LTD., Yokohama-shi, Kanagawa 221-0023 (JP)
(72) Inventor: WATAHIKI, Tomoaki, Hitachinaka-shi, Ibaraki 312-8503 (JP); AKAHOSHI, Tsuyoshi, Tokyo 140-0002 (JP)
(74) Representative: MERH-IP Matias Erny Reichl Hoffmann Patentanwälte PartG mbB
(86) International application number: PCT/JP2019/012696
(87) International publication number: WO 2019/198481

(57) **Abstract**

The present invention provides a technology than can continue automatic driving even when a sudden event has occurred such that a vehicle cannot travel in a recommended lane. This recommended lane determination device outputs a plurality of candidates for recommended lanes in which it is recommended that the vehicle travel, and sets a preference level for each candidate, said preference level expressing the degree to which it is recommended that the vehicle travel in said candidate, and then outputs said preference levels.

## Description

### Technical Field

The present invention relates to a recommended lane determination device that recommends a lane for a car to run.

### Background Art

Recently, autonomous car driving technologies are intensively developed. It is important in autonomous driving to determine a current location of car. In general, the current location of car may be determined by identifying a current coordinate of the car using such as GNSS (Global Navigation Satellite System) and then by identifying an orientation of the car using a sensor.

The driver sets a destination on a car navigation system, for example. Then the car navigation system outputs, as a planned driving route, a route by which the car will be able to reach the destination. An autonomous driving controller controls the car so that the car automatically runs on the planned driving route. At this moment, it is necessary to decide the lane of the road on which the car should run, by comparing the current location of the car with the planned driving route.

Patent Literature 1 listed below describes a technique to recommend a lane for a car to run. Patent Literature 1 describes, as a problem to be solved, "Guiding a route to reach from a current location to a destination, always through one optimum recommended lane", and also describes a technique as : "An on-vehicle navigation device comprising : a lane determinator 9 that determines one recommended lane by performing a reverse-driving lane calculation from a target location set by a target location extractor 5 to a current location, using lane information acquired by a lane information acquirer 7 and a rule read out from a lane calculation rule storage unit 8 ; and an output unit 10 that guides the determined recommended lane along the reverse-driven trajectory calculated by the lane determinator 9." (refer to Abstract).

### Citation List

### Patent Literature

PTL 1: JP 2011-226962 A

### Summary of Invention

### Technical Problem

In conventional techniques such as Patent Literature 1, a lane which is best for the car to run is typically recommended. In such cases, however, if the car has entered a situation where the car cannot run on the best recommended lane for some reason, there is no recommended lane for the car. Then it is difficult for the car to continue autonomous driving.

The present invention has been made in view of the above-described problems. An objective of the present invention is to provide a technique that can continue autonomous driving even if a sudden event has occurred where the car cannot run on the recommended lane.

### Solution to Problem

A recommended lane determination device according to the present invention : outputs a plurality of candidates of recommended lane on which a car is recommended to run ; sets a priority that represents how much the car is recommended to run on the candidate for each of the candidates ; and outputs the priority.

### Advantageous Effects of Invention

In accordance with the recommended lane determination device according to the present invention, even if a sudden event has occurred where the car cannot run on the recommended lane, it is possible for an autonomous driving controller to take measures to avoid the event. Accordingly, it is possible to continue the autonomous driving even when such event has occurred.

### Brief Description of Drawings

[FIG. 1] Figure 1 is a configuration diagram of a recommended lane determination device 100 according to an embodiment 1.
[FIG. 2] Figure 2 is an example where a priority is assigned to each of recommended lanes.
[FIG. 3] Figure 3 is a diagram illustrating a procedure for a lane recommender 140 to set a priority of a recommended lane.
[FIG. 4] Figure 4 is a diagram illustrating a procedure for the recommended lane determination device 100 to set a recommended lane and its priority in an embodiment 2.
[FIG. 5] Figure 5 is a diagram illustrating a procedure for the recommended lane determination device 100 to set a recommended lane and its priority in an embodiment 3.
[FIG 6] Figure 6 is a diagram illustrating a procedure for the recommended lane determination device 100 to set a recommended lane and its priority in an embodiment 4.
[FIG. 7] Figure 7 is a diagram illustrating a procedure by which a priority is set considering a frequency of lane change and a difficulty of lane change.

### Description of Embodiments

### <Embodiment 1>

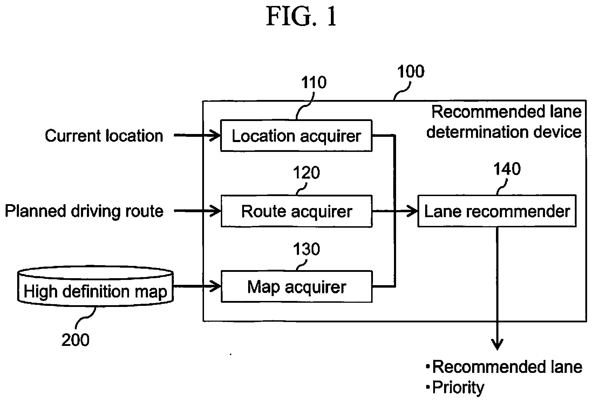

Figure 1 is a configuration diagram of a recommended lane determination device 100 according to an embodiment 1 of the present invention. The recommended lane determination device 100 is a device that determines a lane on which a car is recommended to run. The recommended lane determination device 100 is configured as a ECU (Electronic Control Unit) equipped in the car. The recommended lane determination device 100 includes a location acquirer 110, a route acquirer 120, a map acquirer 130, and a lane recommender 140.

The location acquirer 110 acquires a coordinate that represents a current location of the car. The current location of the car may be determined by identifying a current coordinate of the car using a GNSS (Global Navigation Satellite System), and then by identifying an orientation of the car using a sensor. The location acquirer 110 itself may determine the current location of the car. Alternatively, the current location of the car may be determined by receiving, from outside of the recommended lane determination device 100, data that represents the current location of the car.

The route acquirer 120 acquires data that describes a planned driving route on which the car is planned to run. For example, the planned driving route may be received from a car navigation system equipped on the car.

The map acquirer 130 acquires, from a high definition map 200 equipped on the car, map data that describes coordinates of roads. The high definition map 200 is map information whose locational precision is higher than that of car locations acquired by the GNSS tuner.

In accordance with the procedure described later, the lane recommender 140 : outputs candidates of recommended lanes on which the car is recommended to run ; calculates a priority for each of the recommended lanes ; and outputs pairs of the recommended lane and its priority. The priority is information that represents how desirable it is for the car to run on the recommended lane so as to reach the destination of the planned driving route.

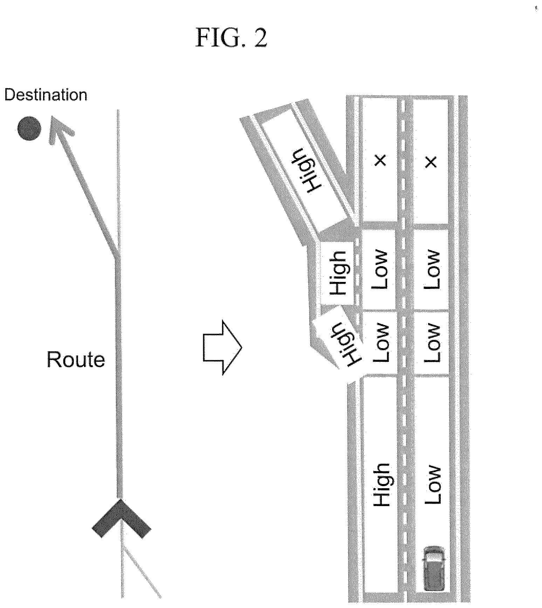

Figure 2 is an example where a priority is assigned to each of recommended lanes. It is assumed that the planned driving route is given as illustrated in the left diagram of Figure 2, and that the actual road is configured as illustrated in the right diagram of Figure 2. The destination of the planned driving route exists beyond a branch road. In order to reach the destination, it is desirable for the car to run toward the branch road. Thus the lane toward the branch road is assigned with a high priority. As shifted away from the branch road, the priority gets lower. If it is impossible to reach the destination after passing through the branch road, the lanes after the branch road are assigned with a lowest priority. It is possible to determine whether the car can reach the destination by determining whether the car can reach the destination within a predetermined travelled distance.

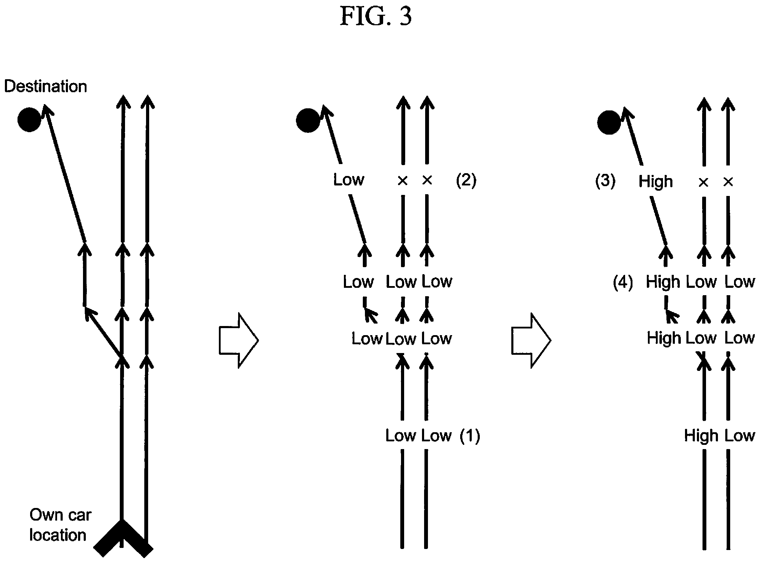

Figure 3 is a diagram illustrating a procedure for the lane recommender 140 to set a priority of a recommended lane. A scene is assumed where the car is running on the road as illustrated in Figure 2 right diagram. The high definition map 200 describes lanes with link relationships of the lanes. It is assumed here that the road in Figure 2 right diagram is described as illustrated in Figure 3 left diagram, and that the car is going toward the destination beyond the branch road.

The route acquirer 120 acquires a planned driving route. The planned driving route describes a route from the current location of the car to the destination. The planned driving route does not always describe a shortest route (hereinafter, referred to as main path) only. In some cases, the planned driving route may describe branch roads (hereinafter, referred to as sub path) branched from the shortest route. Therefore, as illustrated in Figure 3 left diagram, the planned driving route may include lanes by which the car cannot reach the destination. The lane recommender 140 determines a recommended lane from a set of main paths and sub paths.

The lane recommender 140 initializes all lane priorities included in the planned driving route from the current location of the car to the destination (step (1)). For example, the lane recommender 140 assigns a priority "low" to all lanes.

The lane recommender 140 assigns a lowest priority to lanes by which the car cannot reach the destination (step (2)). In Figure 3, such lane is assigned with a priority of "x". Whether the car can reach the destination is determined as described above.

The lane recommender 140 assigns a highest priority to lanes that are directly connected to the destination (step (3)). In Figure 3, such lane is assigned with a priority of "high", "directly connected" means that such lane itself is connected to the destination without through other lanes. It applies below.

The lane recommender 140 assigns a highest priority to lanes that are directly connected to the lane assigned with a highest priority in the lastly performed step (step (4)). The lane recommender 140 repeats step (4) until reaching the current location of the own car. According to the procedure above, candidates of recommended lanes and priorities thereof are configured as illustrated in Figure 2 right diagram and Figure 3 right diagram. The lane recommender 140 outputs the recommended lanes and priorities thereof. For example, the lane recommender 140 may output a pair of lane ID described in the high definition map 200 and a priority of the lane ID.

### <Embodiment 1 : summary>

The recommended lane determination device 100 according to the embodiment 1 outputs a plurality of candidates of recommended lanes, and outputs priorities of each of the candidates. Accordingly, even when the car has entered a situation where the car cannot run on some of recommended lanes, it is possible for the device receiving the recommended lanes (such as autonomous driving controller) to select other recommended lanes having high priority. Accordingly, even when a sudden event occurs where the car cannot run on recommended lanes, it is possible to avoid such events.

The recommended lane determination device 100 according to the embodiment 1 assigns a highest priority to lanes that are passed through by tracing back from a lane directly connected to the destination to the own car. Accordingly, it is possible to recommend a lane by which the car can efficiently reach the destination, and to recommend other lanes as candidates.

### <Embodiment 2>

In the embodiment 1, a lane connection is traced back from the destination to the current location of the car, thereby configuring a recommended lane with highest priority and assigning a priority of "low" or "x" to other lanes. An embodiment 2 of the present invention describes another method for assigning a priority of "low". The configuration of the recommended lane determination device 100 is same as in the embodiment 1.

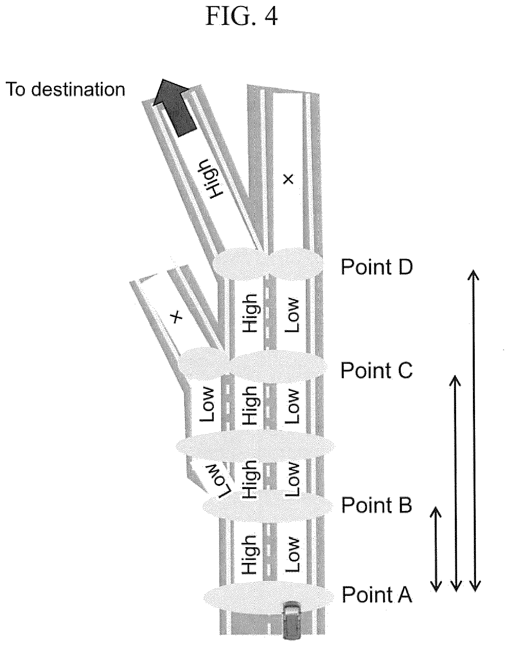

Figure 4 is a diagram illustrating a procedure for the recommended lane determination device 100 to set a recommended lane and its priority in the embodiment 2. In Figure 4, the current location of the car is point A. The lane is branched at locations C and D respectively. The car can run on any one of the two lanes between the points A and B. The car can run on any one of the three lanes between the points B and C. When passing through the point C, the car selects whether running the branch lane at left side or running on the two lanes at right side. When passing through the point D, the car selects whether running the branch lane at left side or running on the right lane. Such situations are indicated by ellipse marks in Figure 4.

In Figure 4, the lane recommender 140 assigns priorities of "high" from the destination to the current location of the car, as described in the embodiment 1. It is assumed here that priorities of "high" are assigned sequentially from the left top lane, as illustrated in Figure 4. The lane recommender 140 further assigns a priority of "x" to lanes by which the car cannot reach the destination, as described in the embodiment 1. It is assumed here that a priority of "×" is assigned to the first branch lane and the right top lane.

If there is a lane that extends along a lane with priority "high" and the car can move to such lane (i.e. no regulation is imposed such as lane change regulation), the more shifted away leftward or rightward from the lane with priority "high", the less priority the lane recommender 140 assigns. In Figure 4, a priority of "low" is assigned to lanes adjacent to the lane with priority "high" on the left and right. If there is a parallel lane on the left or right of the lane with priority "high", a priority of "low" may be assigned to such parallel lane or alternatively less priority (but higher than "x") than "low" may be assigned to such parallel lane. In other words, the more shifted away from the lane with highest priority leftward or rightward, the less priority the lane recommender 140 assigns. In addition, even for lanes adjacent to the lane with priority "high" on the left and right, a priority "high" could be assigned to such adjacent lanes as long as it is deemed that such adjacent lane is substantially same as priority "high" in terms of driving route (for example, the lanes are crowded).

If the car enters the first branch lane, the car no longer can reach the destination. Thus it is necessary for the car to move to the right two lanes before reaching the first branch lane. Similarly, if the car reaches the right top lane, the car no longer can reach the destination. Thus it is necessary for the car to move to the center lane before reaching the right top lane. Then in addition to the priorities of each lane, the lane recommender 140 outputs a distance from the current location of the car to the branch point. The distance may be calculated by comparing the current location of the car with the coordinate of the branch point on the high definition map 200. In Figure 4, a distance between the points A and B, a distance between the points A and C, and a distance between the points A and D are calculated.

In Figure 4, if the car goes toward the branch lane at the point C, the car no longer can reach the destination. Thus the distance between the points A and C is important for the car. Similarly, if the car goes toward the right top lane at the point D, the car no longer can reach the destination. Thus the distance between the points A and D is important for the car. The car can reach the destination by running on any lane at the point B. Thus the distance between the points A and B is not significantly important for the car. Thus regarding a branch point that includes a branch lane which puts the car into a situation where the car cannot reach the destination by changing to such branch lane, the lane recommender 140 outputs information indicating such situation along with distances to each branch point. In the example, the lane recommender 140 outputs the distance between the points A and C and information indicating such situation, and also outputs the distance between the points A and D and information indicating such situation

An autonomous driving controller receiving the distance to the branch point can determine by when the car has to move to the lane with priority "high". In other words, it is not always necessary for the car to run on the lane with priority "high" until reaching the branch point. Therefore, the autonomous driving controller can more freely select, from the recommended lane candidates, the lane for the car to run. It is advantageous to increase stability of autonomous driving against sudden events.

### <Embodiment 3>

In the embodiment 2, since the car may not reach the destination if the car moves toward a branch lane, the device outputs a distance from the current location of the car to the branch point. Similar event may occur at a section where lane change is prohibited. An embodiment 3 of the present invention describes about assigning priority when there is a lane change regulation. The configuration of the recommended lane determination device 100 is same as in the embodiment 1.

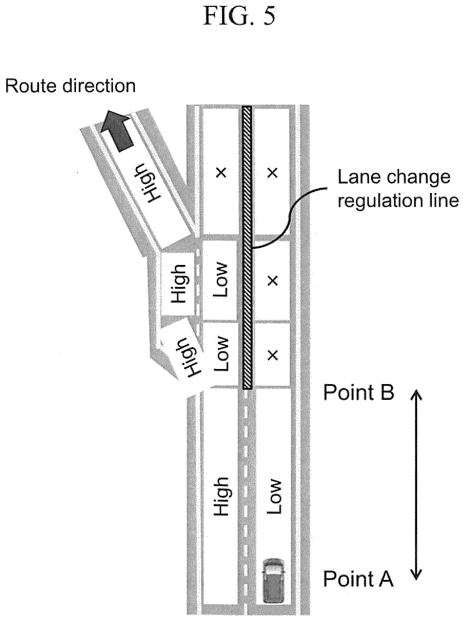

Figure 5 is a diagram illustrating a procedure for the recommended lane determination device 100 to set a recommended lane and its priority in the embodiment 3. In Figure 5, the car can reach the destination by running on the branch lane. Thus similarly to the embodiment 1, the lane recommender 140 sequentially assigns a priority "high" from the branch lane to the current location of the car. If the car passes through the branch point and goes strait, the car cannot reach the destination. Thus the lane recommender 140 assigns a priority of "x" to the top center lane as in the embodiment 1. A priority of "low" may be assigned in accordance with any one of the embodiments 1-2.

If the car passes through the lane change regulation line to enter the rightmost lane, the car cannot reach the destination. Thus the lane recommender 140 assigns a priority of "x" to rightmost lanes after the start point of the lane change regulation line. The lane change regulation line may be handled similarly to branch points in terms of lane structure. Thus the procedure for assigning a priority of "x" is same as in the embodiments 1-2.

The distance from the current location of the car to the start point of the lane change regulation line is important for the car similarly to the distance from the car to the branch point. Thus the lane recommender 140 calculates a distance from the current location of the car to the start point of the lane change regulation line (distance between points A and B), and outputs the calculated distance along with priorities of each lane. If the car cannot reach the destination after passing through the start point, the lane recommender 140 also outputs information indicating such situation along with the calculated distance. Accordingly, even if there is a lane change regulation line, it is advantageous to increase stability of autonomous driving as in the embodiment 2. The coordinates of the regulation line may be acquired from the high definition map 200.

### <Embodiment 4>

The embodiments above describes examples where a priority of "high" is assigned by tracing back from the destination to the current location of the car. When using such procedure, a priority of "low" is assigned to lanes through which the car can move to a lane going toward the destination, and a priority of "x" is assigned to lanes through which the car cannot move to a lane going toward the destination. However, even by running through a lane with a priority of "x", the car may reach the destination in some cases such as in a case where the lane with a priority of "x" is connected to a lane by which the car can reach the destination far beyond the current location. An embodiment 4 of the present invention describes a procedure to readjust an assigned priority in terms of whether the destination is reachable. The configuration of the recommended lane determination device 100 is same as in the embodiment 1.

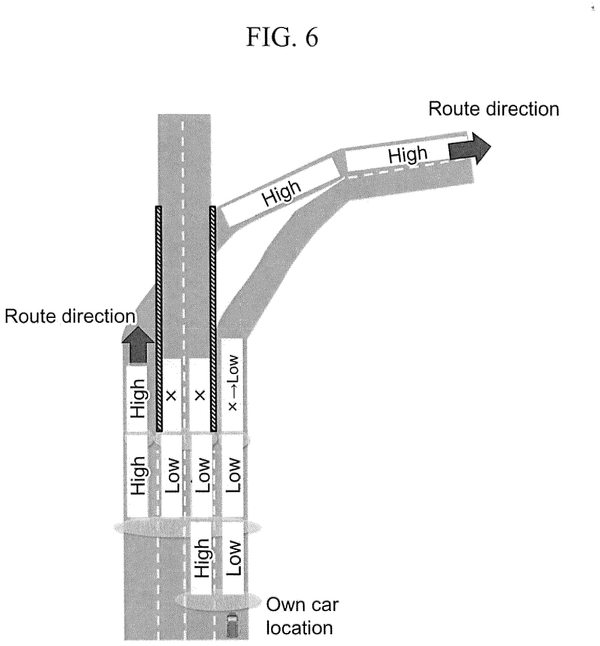

Figure 6 is a diagram illustrating a procedure for the recommended lane determination device 100 to set a recommended lane and its priority in the embodiment 4. For example, it is assumed that the car is running on the leftmost lane. By calculating the recommended lane candidates and priorities in accordance with the embodiments 1-3, the leftmost lane and the left branch lane may be assigned with a priority of "high", and the right branch lane may be assigned with a priority of "x", as illustrated in Figure 6. In Figure 6, however, the right branch lane is joined with the left branch lane at a point beyond the current location. Thus it is not always necessary to assign a priority of "×" to the right branch lane. Thus after assigning priorities of recommended lane candidates, the lane recommender 140 increases the priority of lanes through which the car can reach the destination. In Figure 6, the priority of the right branch lane is increased from "x" to "low" at the point entering the right branch lane. The amount of increase may be appropriately determined according to a frequency of lane change or difficulty of lane change described below.

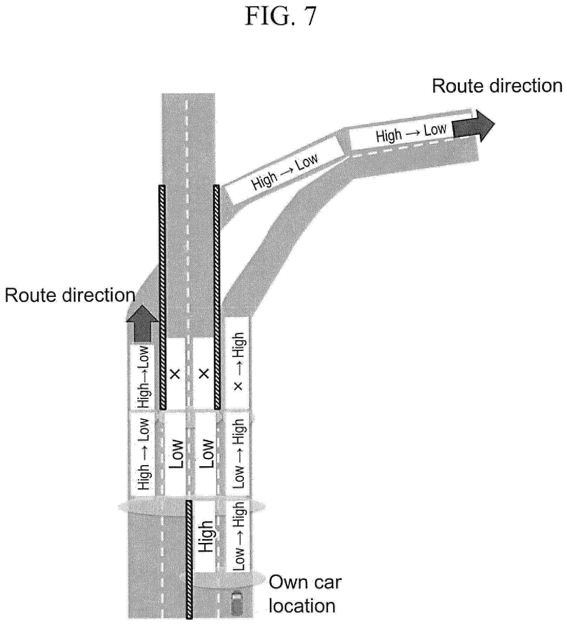

Figure 7 is a diagram illustrating a procedure by which a priority is set considering a frequency of lane change and a difficulty of lane change. In Figure 7, lane change regulation lines are added at center of the road in addition to the lane structure of Figure 6. Other lane structures are same as Figure 6. It is assumed that the lane recommender 140 assigns a priority of "high" to the leftmost lane, and other priorities to other lanes as in Figure 6.

In order to move from the current location of the car to the leftmost lane in Figure 7, it is necessary for the car to change the lane three times. In autonomous driving, it is necessary to perform processes such as keeping a distance between the own car and subsequent cars for each of performing lane change. Thus calculation load or algorithm may be increased. Therefore, in terms of autonomous driving, it is desirable if a frequency of lane change is small.

In order to move from the current location of the car to the leftmost lane in Figure 7, it is necessary to change the lane at the section where there is no lane change regulation line. Therefore, it is necessary for the car to change the lane at least twice at the section where a priority of "low" is assigned at the center of Figure 7. In other words, the car will change the lane multiple times within short time span. Then the timing for changing the lane is limited and thus the lane change is difficult.

The lane recommender 140 may readjust the assigned priorities considering a frequency of lane change or difficulty of lane change as described above. In Figure 7, the car can reach the destination through both of the rightmost lane and the leftmost lane. Thus the lane recommender 140 increases, among those lanes, a priority of the lane where a lane change frequency is as small as possible and lane change difficulty is also small. For example, it is conceivable to : (a) replace the priority of the rightmost lane with the priority of the leftmost lane ; (b) assign a highest priority to the rightmost lane and sequentially decrease priorities of other lanes.

In the example of Figure 7, the priority is assigned in accordance with the embodiments 1-3, and then the priority is readjusted. Alternatively, the priority may be assigned from the beginning according to lane change frequency or lane change difficulty. For example, a priority of "high" is assigned to lanes with small lane change frequency or small lane change difficulty among lanes through which the car can reach the destination, and then the priority is decreased as the frequency or difficulty of lane change from the lane with priority "high" is increased.

Lane change difficulty may be calculated as a numerical value considering various factors. In general, the more strict the constraint of lane change is, the more difficult lane change is. Other than timing constraint of lane change, factors such as speed limit / distance between cars / congestion state / vision state may be considered. Lane change difficulty may be digitized by appropriate method such as weighted summation of these factors.

### <About modification examples of present invention>

The present invention is not limited to the aforementioned embodiments, and includes various modification examples. For example, the aforementioned embodiments are described in detail in order to facilitate easy understanding of the present invention, and are not limited to necessarily include all the described components. Some of the components of a certain embodiment can be substituted into the components of another embodiment, and the components of another embodiment can be added to the component of a certain embodiment. In addition, the components of another embodiment can be added, removed, and substituted to, from, and into some of the components of the aforementioned embodiments.

In the embodiments above, three degrees of priority are shown as "high" "low" "x". The priority may be two degrees or more than three degrees. Low priority does not always mean that the car is prohibited to run.

A part or all of the aforementioned configurations, functions, processing units, and processing means may be realized by hardware by designing an integrated circuit, for example. Each of the aforementioned configurations and functions may be realized by software by interpreting and executing a program that realizes each function by the processor. Information of programs, tables, and files for realizing the functions can be stored in a recording device such as a memory, a hard disk, or a solid state drive (SSD), or a recording medium such as an IC card, or an SD card. Furthermore, control lines and information lines illustrate lines which are considered to be necessary for the description, and not all the control lines and information lines in a product are necessarily illustrated. Almost all the configurations may be considered to be actually connected to each other.

### Reference Signs List

- 100: recommended lane determination device
- 110: location acquirer
- 120: route acquirer
- 130: map acquirer
- 140: lane recommender
- 200: high definition map

## Claims

1. A recommended lane determination device that recommends a lane on which a car runs, the device comprising:
a location acquirer that acquires a current location of the car;
a route information acquirer that acquires route information describing a planned driving route on which the car is planned to run from the current location to a destination;
a map data acquirer that acquires map data describing a lane coordinate of a road including the planned driving route; and
a lane recommender that determines a recommended lane on which the car is recommended to run among the lane,
wherein the lane recommender outputs a plurality of candidates of the recommended lane, assigns to each of the candidates a priority representing how much the car is recommended to run on the candidate, and outputs the priority.

2. The recommended lane determination device according to claim 1,
wherein the lane recommender configures the candidate and a priority of the candidate sequentially from farer lane to closer lane from the current location of the car.

3. The recommended lane determination device according to claim 2,
wherein the lane recommender assigns a highest priority to a lane that is directly connected to a destination of the planned driving route, and
wherein the lane recommender assigns a highest priority to lanes that are passed through by tracing back a lane connection from a lane assigned with a highest priority to the current location of the car.

4. The recommended lane determination device according to claim 3,
wherein for a lane that extends along a lane assigned with a highest priority and to which the car can move, the closer from a lane assigned with a highest priority, the higher priority the lane recommender assigns.

5. The recommended lane determination device according to claim 1,
wherein the lane recommender acquires a first distance between a branch point where a lane is branched and the current location of the car,
wherein the lane recommender determines whether the car can reach a destination of the planned driving route even if the car moves to a branch lane at the branch point, and
wherein the lane recommender outputs, along with a candidate of the recommended lane and a priority of the candidate, the first distance and a determined result of whether the car can reach the destination.

6. The recommended lane determination device according to claim 1,
wherein the lane recommender acquires, from the map data, a start point of a section where lane change is prohibited, and
wherein if the car cannot reach a destination of the planned driving route after the car reaches the start point, the lane recommender assigns a lower priority to lanes after the start point than other lanes.

7. The recommended lane determination device according to claim 1,
wherein the lane recommender acquires, from the map data, a second distance between a start point of a section where lane change is prohibited to the current location of the car, and
wherein the lane recommender outputs the second distance along with a candidate of the recommended lane and a priority of the candidate.

8. The recommended lane determination device according to claim 1,
wherein if there is a reachable lane through which the car can reach a destination of the planned driving route other than a lane assigned with a highest priority, the lane recommender corrects a priority of the reachable lane upward.

9. The recommended lane determination device according to claim 1,
wherein after assigning a priority of the candidate, the lane recommender counts a frequency of lane change necessary for the car to reach a destination of the planned driving route, and also calculates a difficulty coefficient representing a difficulty of lane change, and
wherein the lane recommender readjusts a priority of the candidate according to the frequency of lane change and the difficulty coefficient.
